# EUROPEAN PATENT APPLICATION

(11) **EP 1 615 276 A1**
(43) Date of publication of application: **11.01.2006**
(21) Application number: 05013361.0
(22) Date of filing: 21.06.2005
(51) Int. Cl.: H01M 4/42, B22F 1/00, C22C 18/00, H01M 4/24, H01M 4/06

(54) **Zinc alloy powder for alkaline cell and method for producing same**

(30) Priority: 23.06.2004 JP 2004184987; 25.05.2005 JP 2005152780
(71) Applicant: Dowa Mining Co., Ltd., Tokyo 100-8282 (JP)
(72) Inventor: Ebara, Atsushi, Katagami-shi Akita 010-0101 (JP); Kitamura, Toshiya, Akita-shi Akita 011-0915 (JP)
(74) Representative: Manitz, Finsterwald & Partner GbR

(57) **Abstract**

There is provided a zinc alloy powder for an alkaline cell, which is capable of decreasing the volume of hydrogen gas generated before and after the discharge of the cell to prevent an electrolyte in the cell from leaking, and a method for producing such a zinc alloy powder by heat-treating the powder in a short time. A zinc alloy powder consisting essentially of 0.0001 to 0.500 wt% of at least one element selected from the group consisting of aluminum, indium, gallium, thallium, magnesium, calcium, strontium, cadmium, tin and lead, 0.001 to 0.050 wt% of bismuth, and the balance being zinc and unavoidable impurities, is heat-treated at a higher temperature than 250 °C in an inert gas or reducing gas atmosphere.

## Description

### BACKGROUND OF THE INVENTION

### Field of the Invention

The present invention generally relates to a zinc alloy powder for alkaline cells, and a method for producing the same. More specifically, the invention relates to a zinc alloy powder used as an active material of the negative electrode of a cell, such as an alkaline cell, and a method for producing the same.

### Description of the Prior Art

Conventionally, a relatively inexpensive zinc powder having a high hydrogen overvoltage has been used as an active material of the negative electrode of a cell, such as an alkaline cell. However, if only zinc is used as an active material of the negative electrode of a cell, there is a problem in that a large volume of hydrogen gas is generated during the use of the cell, so that an electrolyte in the cell leaks.

In order to solve this problem, zinc used as an active material of the negative electrode of a cell has been amalgamated by mercury, which has a high hydrogen overvoltage, for a long time. However, in this method, there is a problem in that environmental pollution due to mercury occurs when waste cells are discarded. Therefore, it has been required to develop a zinc powder using no mercury, i.e., a mercury-free zinc powder.

As such mercury-free zinc powders, zinc alloypowders obtained by alloying zinc with an element, such as bismuth, aluminum, indium, gallium, thallium, magnesium, calcium, strontium, cadmium, tin or lead, which have the second highest hydrogen overvoltage after mercury and which have inhibitor effects, have been used. In addition, there are proposed a method for stabilizing crystal grains in a zinc alloy powder by a heat treatment (see, e.g., Japanese Patent No. 2932285 and Japanese Patent Publication No. 7-123043), and a method for efficiently coating the surface of a zinc alloy powder with bismuth or indium (see, e.g., Japanese Patent Laid-Open No. 2000-113883).

However, in the methods disclosed in Japanese Patent No. 2932285, Japanese Patent Publication No. 7-123043 and Japanese Patent Laid-Open No. 2000-113883, there is a problem in that the volume of gas generated after the discharge of a cell is increased although it is possible to decrease the volume of gas generated before the discharge of the cell by increasing the amount of an additive such as bismuth used as an inhibitor. That is, in order to decrease the volume of gas generated before the discharge of a cell, it is effective to increase the amount of an additive such as bismuth, whereas in order to decrease the volume of gas generated after the discharge of a cell, it is effective to decrease the amount of an additive such as bismuth, so that there is a problem in that it is not possible to decrease both of the amounts of gases generated before and after the discharge of a cell.

In order to solve this problem, there is proposed a method for heat-treating a zinc alloy powder, to which an inhibitor such as bismuth is added, at a temperature of 150 to 250 °C for two hours or more in an inert gas atmosphere having an oxygen concentration of less than 100 ppm (see, e.g., Japanese Patent Laid-Open No. 2001-273893).

However, in the method disclosed in Japanese Patent Laid-Open No. 2001-273893, since it is required to heat-treat the zinc alloy powder at a temperature of 150 to 250 °C for two hours or more, it takes a long time to carry out the heat treatment, and there are some cases where it is not possible to sufficiently decrease the volume of hydrogen gas generated before the discharge of a cell using the zinc alloy powder.

### SUMMARY OF THE INVENTION

It is therefore an object of the present invention to eliminate the aforementioned problems and to provide a zinc alloy powder for an alkaline cell, which is capable of decreasing the volume of hydrogen gas generated before and after the discharge of the cell to prevent an electrolyte in the cell from leaking, and a method for producing such a zinc alloy powder by heat-treating the powder in a short time.

In order to accomplish the aforementioned and other objects, the inventors have diligently studied and found that it is possible to produce a zinc alloy powder for an alkaline cell, which is capable of decreasing the volume of hydrogen gas generated before and after the discharge of the cell, by heat-treating the powder for a short time, if the amount of bismuth added to zinc powder is decreased and if the heat treatment is carried out at a temperature of higher than 250 °C. Thus, the inventors have made the present invention.

According one aspect of the present invention, according to one aspect of the present invention, there is provided a method for producing a zinc alloy powder for an alkaline cell, the method comprising the steps of: preparing a zinc alloy powder consisting essentially of 0.0001 to 0.500 wt% of at least one element selected from the group consisting of aluminum, indium, gallium, thallium, magnesium, calcium, strontium, cadmium, tin and lead, 0.001 to 0.050 wt% of bismuth, and the balance being zinc and unavoidable impurities; and heat-treating the zinc alloy powder at a higher temperature than 250 °C in an inert gas or reducing gas atmosphere.

In this method for producing a zinc alloy powder for an alkaline cell, the amount of bismuth in the zinc alloy powder is preferably in the range of from 0.004 to 0.050 wt%. When the temperature is lower than 400 °C, or preferably, when the temperature is not lower than 300 °C and lower than 400 °C, the amount of bismuth in the zinc alloy powder is preferably in the range of from 0.009 to 0.030 wt%, and more preferably in the range of from 0.012 to 0.020 wt%. When the temperature is not lower than 400 °C, the amount of bismuth in the zinc alloy powder is preferably in the range of 0.004 to 0.010 wt%.

According to another aspect of the present invention, there is provided a zinc alloy powder for an alkaline cell, the zinc alloy powder consisting essentially of: 0.0001 to 0.500 wt% of at least one element selected from the group consisting of aluminum, indium, gallium, thallium, magnesium, calcium, strontium, cadmium, tin and lead; 0.001 to 0.012 wt% of bismuth; and the balance being zinc and unavoidable impurities, and wherein the zinc alloy powder has a bulk density of not less than 3.01 g/cm³, and preferably has a bulk density of not less than 3.03 g/cm³.

According to another aspect of the present invention, there is provided a zinc alloy powder for an alkaline cell, the zinc alloy powder consisting essentially of: 0.0001 to 0.500 wt% of at least one element selected from the group consisting of aluminum, indium, gallium, thallium, magnesium, calcium, strontium, cadmium, tin and lead; 0.027 to 0.050 wt% of bismuth; and the balance being zinc and unavoidable impurities, and wherein the zinc alloy powder has a bulk density of not less than 2.76 g/cm³, and preferably has a bulk density of not less than 2.78 g/cm³.

According to a further aspect of the present invention, there is provided a zinc alloy powder for an alkaline cell, the zinc alloy powder consisting essentially of: 0.0001 to 0.500 wt% of at least one element selected from the group consisting of aluminum, indium, gallium, thallium, magnesium, calcium, strontium, cadmium, tin and lead; 0.012 to 0.027 wt% of bismuth; and the balance being zinc and unavoidable impurities, and wherein the zinc alloy powder has a bulk density derived from y ≧ 3.25 - 18x assuming that the amount of bismuth in the zinc alloy powder denotes x (wt%) and the bulk density denotes y (g/cm³).

The above described zinc alloy powder for an alkaline cell is preferably heat-treated at a higher temperature than 250 °C in an inert gas or reducing gas atmosphere. In the above described zinc alloy powder for an alkaline cell, the ratio of the maximum peak value of segregated substances of bismuth to an average value of backgrounds is preferably not less than 4.0, more preferably not less than 4.2, at a sampling time of 300 milliseconds in an electron probe microanalysis.

According to a still further aspect of the present invention, there is provided an alkaline primary cell wherein the above described zinc alloy powder or a zinc alloy powder produced by the above described method is used as an active material of a negative electrode.

According to the present invention, it is possible to produce a zinc alloy powder for an alkaline cell, wherein the volume of hydrogen gas generated before the discharge of the cell is very small and the volume of hydrogen gas generated after the discharge of the cell is also small, by heat-treating the powder in a short time.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
FIG. 1 is a graph showing the relationship between the amount of added bismuth and the bulk density in Examples 1 through 14 and Comparative Examples 1 through 13;
FIG. 2 is a graph showing the relationship between the amount of added bismuth and the volume of gas before discharge in Examples 1 through 9 and Comparative Examples 1 through 8;
FIG. 3 is a graph showing the relationship between the amount of added bismuth and the volume of gas after over discharge in Examples 1 through 9 and Comparative Example 1 through 8;
FIG. 4 is a graph showing the relationship between the crystal grain size and the volume of gas before discharge in Examples 1 through 9 and Comparative Examples 1 through 8;
FIG. 5 is a graph showing the relationship between the crystal grain size and the volume of gas after over discharge in Examples 1 through 9 and Comparative Examples 1 through 8;
FIG. 6 is a graph showing the relationship between the heat treatment time and the volume of gas before discharge in Examples 15 through 19 and Comparative Examples 14 through 17;
FIG. 7 is a graph showing the relationship between the heat treatment time and the volume of gas before discharge in Examples 20 through 24 and Comparative Examples 18 through 21;
FIG. 8 is a graph showing the relationship between the ratio of the maximum peak value to background (maximum peak value / background) and the volume of initial gas in Examples 25 through 27 and Comparative Examples 22 through 27; and
FIG. 9 is a graph showing the relationship between the ratio of the maximum peak value to background (maximum peak value / background) and the volume of gas after over discharge in Examples 25 through 27 and Comparative Examples 22 through 27.

### DESCRIPTION OF THE PREFERRED EMBODIMENTS

In a preferred embodiment of a method for producing a zinc alloy powder for an alkaline cell according to the present invention, a molten zinc alloy obtained by adding bismuth or the like to zinc to melt the mixture is atomized by the gas atomizing method to be classified by means of a sieve to produce a zinc alloy powder which consists essentially of: 0.0001 to 0.500 wt% of at least one element selected from the group consisting of aluminum, indium, gallium, thallium, magnesium, calcium, strontium, cadmium, tin and lead; 0.001 to 0.050 wt%, preferably 0.004 to 0.050 wt% of bismuth; and the balance being zinc and unavoidable impurities. The zinc alloy powder thus obtained is heat-treated at a higher temperature than 250 °C in an inert gas or reducing gas atmosphere. If the amount of added bismuth is less than 0.001 wt%, the function of decreasing the volume of gas generated before the discharge of the cell is insufficient. On the other hand, if the amount of added bismuth is larger than 0.050 wt%, the volume of gas generatedbefore the discharge of the cell is increased by adding excessive bismuth, and the volume of gas generated after the over discharge of the cell is also increased.

In this preferred embodiment of a method for producing a zinc alloy powder for an alkaline cell according to the present invention, when the heat treatment temperature is lower than 400 °C, preferably a temperature of not lower than 300 °C and lower than 400 °C, the amount of bismuth is preferably in the range of from 0.009 to 0.030 wt%, and more preferably in the range of from 0.012 to 0.020 wt%. When the heat treatment temperature is in the above described temperature range, it is possible to remarkably decrease the volume of gas generated before the discharge of the cell and after the over discharge of the cell if the amount of bismuth is in the range of from 0.009 to 0.030 wt%, and it is possible to more remarkably decrease the volume of gas generated before the discharge of the cell and after the over discharge of the cell if the amount of bismuth is in the range of from 0.012 to 0.020 wt%.

When the heat treatment temperature is not lower than 400 °C, the amount of bismuth is preferably 0.004 to 0.010 wt%. If the amount of bismuth is in this range, it is possible to remarkably decrease the volume of gas generated before the discharge of the cell and after the over discharge of the cell.

By the above described preferred embodiment of a method for producing a zinc alloy powder for alkaline cells according to the present invention, it is possible to produce a zinc alloy powder for alkaline cells, which consists essentially of: 0.0001 to 0.500 wt% of at least one element selected from the group consisting of aluminum, indium, gallium, thallium, magnesium, calcium, strontium, cadmium, tin and lead; 0.001 to 0.050 wt% of bismuth; and the balance being zinc and unavoidable impurities, and which has a bulk density of not less than 3.01 g/cm³, preferably not less than 3.03 g/cm³, if the content of bismuth is in the range of 0.001 to 0.012 wt%, a bulk density of not less than 2.76 g/cm³, preferably not less than 2.78 g/cm³, if the content of bismuth is in the range of from 0.027 to 0.050 wt%, or a bulk density derived from y ≧ 3.25- 18x assuming that the amount of added bismuth denotes x (wt%) and the bulk density denotes y (g/cm³) if the content of bismuth is in the range of from 0.012 to 0.027 wt%.

Furthermore, since the capacity of a cell having the same volume increases if the packing rate increases, the bulk density is preferably higher. As described above, according the preferred embodiment of a method for producing a zinc alloy powder for alkaline cells according to the present invention, it is possible to increase the bulk density even if the amount of added bismuth is the same, so that it is possible to improve the packing rate to increase the capacity of a cell having the same volume. It is considered that the reason why the bulk density can be increased by the preferred embodiment of a zinc alloy powder for alkaline cells according to the present invention is that the surface of the zinc alloy powder is smooth. It is considered that the surface activity of the zinc alloy powder is weakened to decrease the volume of generated hydrogen gas if the surface of the zinc alloy powder is smooth. Therefore, it is possible to decrease the volume of generated hydrogen gas by increasing the bulk density.

Examples of a zinc alloy powder for alkaline cells and a method for producing the same according to the present invention will be described below in detail.

### Examples 1 through 7

First, a molten zinc alloy obtained by mixing metals of Al, Bi and In with zinc to melt them was sprayed into air to be atomized by the gas atomizing method, and then, classified by means of a sieve to produce zinc alloy powders having a grain size of about 35 to 200 meshes. The components of each of the zinc alloy powders thus obtained were analyzed by the atomic absorptionmethod. The results are shown in Table 1.

**Table 1**

| | Al (ppm) | Bi (ppm) | In (ppm) | Fe (ppm) | Pb (ppm) | Cd (ppm) | Cu (ppm) |
|---|---|---|---|---|---|---|---|
| Ex.1 | 34 | 42 | 500 | 1.5 | 6.4 | 0.7 | 0.5 |
| Ex.2 | 31 | 91 | 517 | 3.0 | 3.9 | 0.5 | 0.5 |
| Ex.3 | 32 | 122 | 498 | 2.0 | 5.2 | 0.6 | 0.4 |
| Ex.4 | 32 | 151 | 501 | 2.1 | 6.8 | 0.9 | 0.7 |
| Ex.5 | 32 | 272 | 497 | 2.7 | 3.7 | 0.5 | 0.3 |
| Ex.6 | 29 | 369 | 505 | 1.9 | 5.2 | 1.0 | 0.3 |
| Ex.7 | 30 | 481 | 499 | 2.5 | 4.0 | 0.5 | 0.4 |
| Ex.8 | 34 | 42 | 500 | 1.5 | 6.4 | 0.7 | 0.5 |
| Ex.9 | 31 | 91 | 517 | 3.0 | 3.9 | 0.5 | 0.5 |
| Ex.10 | 32 | 122 | 498 | 2.0 | 5.2 | 0.6 | 0.4 |
| Ex.11 | 32 | 151 | 501 | 2.1 | 6.8 | 0.9 | 0.7 |
| Ex.12 | 32 | 272 | 497 | 2.7 | 3.7 | 0.5 | 0.3 |
| Ex.13 | 29 | 369 | 505 | 1.9 | 5.2 | 1.0 | 0.3 |
| Ex.14 | 30 | 481 | 499 | 2.5 | 4.0 | 0.5 | 0.4 |
| Comp.1 | 34 | 42 | 500 | 1.5 | 6.4 | 0.7 | 0.5 |
| Comp.2 | 31 | 91 | 517 | 3.0 | 3.9 | 0.5 | 0.5 |
| Comp.3 | 32 | 122 | 498 | 2.0 | 5.2 | 0.6 | 0.4 |
| Comp.4 | 32 | 151 | 501 | 2.1 | 6.8 | 0.9 | 0.7 |
| Comp.5 | 32 | 272 | 497 | 2.7 | 3.7 | 0.5 | 0.3 |
| Comp.6 | 29 | 369 | 505 | 1.9 | 5.2 | 1.0 | 0.3 |
| Comp.7 | 30 | 481 | 499 | 2.5 | 4.0 | 0.5 | 0.4 |
| Comp.8 | 34 | 665 | 497 | 1.7 | 3.6 | 1.5 | 0.7 |
| Comp.9 | 34 | 42 | 500 | 1.5 | 6.4 | 0.7 | 0.5 |
| Comp.10 | 31 | 91 | 517 | 3.0 | 3.9 | 0.5 | 0.5 |
| Comp.11 | 32 | 151 | 501 | 2.1 | 6.8 | 0.9 | 0.7 |
| Comp.12 | 32 | 272 | 497 | 2.7 | 3.7 | 0.5 | 0.3 |
| Comp.13 | 30 | 481 | 499 | 2.5 | 4.0 | 0.5 | 0.4 |

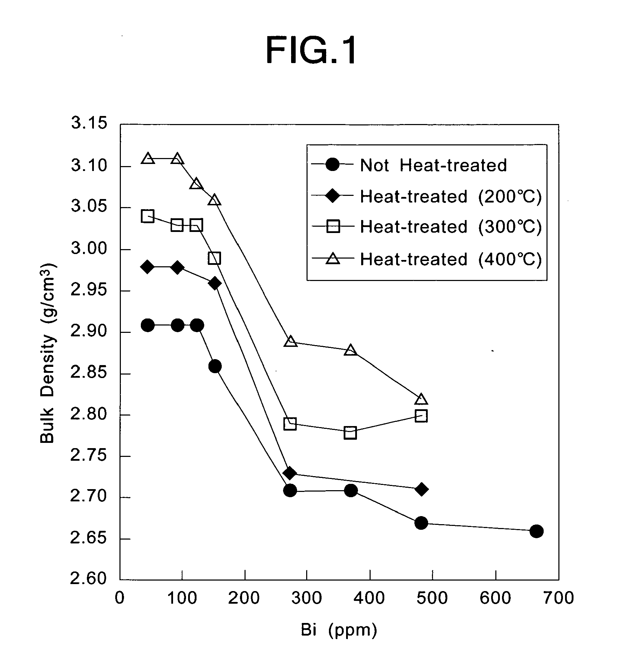

Then, each of the zinc alloy powders thus obtained was heat-treated at 300 °C in an atmosphere of nitrogen gas for 30 minutes by means of a heat treating furnace, and then, gradually cooled to a room temperature in an atmosphere of nitrogen gas. The bulk density of each of the zinc alloy powders thus heat-treated was measured by a method defined by JIS Z2504. In addition, the crystal grain size of each of the zinc alloy powders was obtained by the Zephery planimeter method (a method for finding the square root of a value obtained by dividing the cross-sectional area of crystal grains by the number of the crystal grains contained therein) from a photograph of a cross section of crystal grains. These results are shown in Table 2 and FIG. 1.

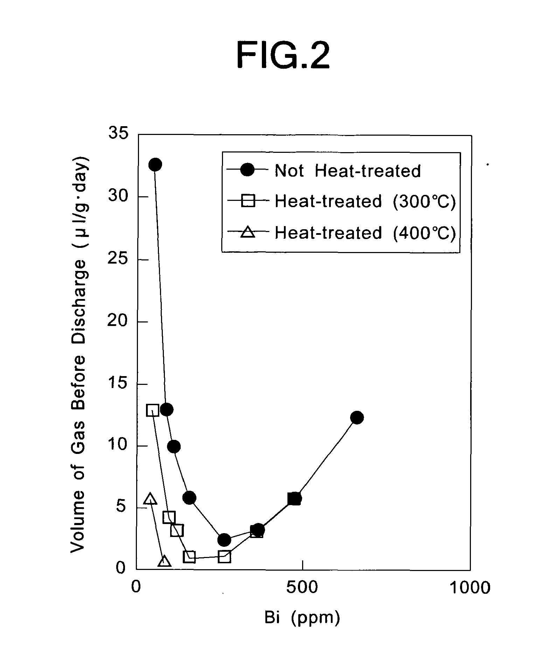

In addition, 5g of each of the zinc alloy powders thus heat-treated was mixed in 10g of a solution containing 40% KOH and saturated zinc oxide to be held at 60 °C for three days, and then, the average speed of the volume of generated gas was calculated as the volume of initial gas (the volume of gas before discharge). The results are shown in Table 2 and FIG. 2.

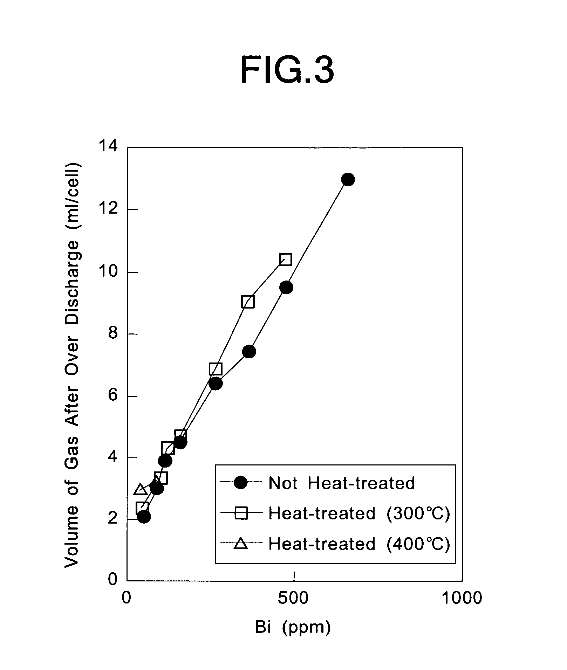

Moreover, each of the zinc alloy powders thus heat-treated was mixed with a solution containing 40% KOH and saturated zinc oxide and with polyacrylic acid to prepare a gel. The gel thus prepared was used as an active material of a negative electrode, and manganese dioxide was used as an active material of a positive electrode to prepare an LR6 cell (alkaline cell) . After this cell was discharged with a resistance of 10 Ω for 48 hours, it was held at 60 °C for 8 hours, and the volume of gas generated in the cell (the volume of gas after over discharge) was measured. The results are shown in Table 2 and FIG. 3.

**Table 2**

| | Heat Treatment Temp. (°C) | Heat Treatment Time (min) | Bulk Density (g/cm³) | Crystal Grain Size (µm) | Initial Gas (µl/g·day) | Gas After Over Discharge (ml/cell) |
|---|---|---|---|---|---|---|
| Ex.1 | 300 | 30 | 3.04 | 86 | 13.1 | 2.4 |
| Ex.2 | 300 | 30 | 3.03 | 99 | 4.0 | 3.5 |
| Ex.3 | 300 | 30 | 3.03 | 94 | 2.9 | 4.2 |
| Ex.4 | 300 | 30 | 2.99 | 88 | 1.6 | 4.7 |
| Ex.5 | 300 | 30 | 2.79 | 75 | 1.8 | 6.9 |
| Ex.6 | 300 | 30 | 2.78 | 90 | 3.0 | 9.1 |
| Ex.7 | 300 | 30 | 2.80 | 83 | 6.0 | 10.4 |
| Ex.8 | 400 | 30 | 3.11 | 96 | 6.2 | 2.9 |
| Ex.9 | 400 | 30 | 3.11 | 95 | 1.7 | 3.2 |
| Ex.10 | 400 | 30 | 3.08 | - | - | - |
| Ex.11 | 400 | 30 | 3.06 | - | - | - |
| Ex.12 | 400 | 30 | 2.89 | - | - | - |
| Ex.13 | 400 | 30 | 2.88 | - | - | - |
| Ex.14 | 400 | 30 | 2.82 | - | - | - |
| Comp.1 | - | - | 2.91 | 59 | 32.6 | 2.2 |
| Comp.2 | - | - | 2.91 | 58 | 13.2 | 3.0 |
| Comp.3 | - | - | 2.91 | 65 | 10.1 | 3.8 |
| Comp.4 | - | - | 2.86 | 75 | 5.7 | 4.5 |
| Comp.5 | - | - | 2.71 | 70 | 2.4 | 6.4 |
| Comp.6 | - | - | 2.71 | 58 | 3.2 | 7.5 |
| Comp.7 | - | - | 2.67 | 63 | 6.0 | 9.6 |
| Comp.8 | - | - | 2.66 | 70 | 12.2 | 13.0 |
| Comp.9 | 200 | 30 | 2.98 | - | - | - |
| Comp.10 | 200 | 30 | 2.98 | - | - | - |
| Comp.11 | 200 | 30 | 2.96 | - | - | - |
| Comp.12 | 200 | 30 | 2.73 | - | - | - |
| Comp.13 | 200 | 30 | 2.71 | - | - | - |

### Examples 8 through 14

Zinc alloy powders having compositions shown in Table 1 were produced by the same method as that in Examples 1 through 7, and then, heat-treated by the same method as that in Examples 1 through 7, expect that the heat treatment temperature was 400 °C. With respect to the zinc alloy powders thus heat-treated, the bulk density, the volume of initial gas, and the volume of gas after over discharge were measured (only the bulk density was measured in Examples 10 through 14) by the same method as that in Examples 1 through 7. These results are shown in Table 2 and FIGS. 1 through 3.

### Comparative Examples 1 through 8

With respect to zinc alloy powders having compositions shown in Table 1, which were produced by the same method as that in Examples 1 through 7 and which were not heat-treated, the bulk density, the volume of initial gas, and the volume of gas after over discharge were measured by the same method as that in Examples 1 through 7. These results are shown in Table 2 and FIGS. 1 through 3.

### Comparative Examples 9 through 13

Zinc alloy powder shaving compositions shown in Table 1 were produced by the same method as that in Examples 1 through 7, and then, heat-treated by the same method as that in Examples 1 through 7, expect that the heat treatment temperature was 200 °C . With respect to the zinc alloy powders thus heat-treated, the bulk density was measured by the same method as that in Examples 1 through 7. These results are shown in Table 2 and FIG. 1.

As can be seen from Tables 1, 2 and FIG. 1, as compared with Comparative examples 1 through 8 wherein the heat treatment is not carried out and with Comparative Examples 9 through 13 wherein the heat treatment is carried out at the low temperature (200 °C), when the heat treatment is carried out as Examples 1 through 14, the bulk density is higher even if the amount of added Bi is the same, and it is possible to maintain the high bulk density even if the amount of added Bi is decreased, so that it is possible to improve the packing rate. In particular, the bulk density can be 3.03 g/cm³ or more if the amount of added Bi is not more than 122 ppm as Examples 1 through 3 and 8 through 10, and the bulk density can be 2.78 g/cm³ or more if the amount of added Bi is not more than 272 ppm as Examples 12 through 14. In addition, the bulk density can be 2.99 g/cm³ or more if the amount of added Bi is 151 ppm. Moreover, if the amount of added Bi is in the range of from 122 to 272 ppm, the bulk density can be derived from y ≧ 3.25 - 0.0018x (ppm) assuming that the amount of added Bi denotes x (ppm) and the bulk density denotes y (g/cm³). That is, assuming that the amount of added Bi denotes x (wt%) and the bulk density denotes y (g/cm³), the bulk density can be derived from y ≧ 3.25 - 18x (wt%) .

As can be seen from Tables 1, 2 and FIG. 2, when the heat treatment is carried out as Examples 1 through 9 as compared with Comparative Examples 1 through 8 wherein the heat treatment is not carried out, the volume of initial gas (the volume of gas before discharge) is greatly decreased even if the amount of added Bi is the same. In addition, when the heat treatment is carried out as Examples 1 through 9, the volume of initial gas (the volume of gas before discharge) decreases to a case where the amount of added Bi is 151 ppm (Example 4), as the amount of added Bi increases, and thereafter, the volume of initial gas increases as the amount of added Bi increases. On the other hand, as can be seen from Tables 1, 2 and FIG. 3, the volume of gas after over discharge increases as the amount of added Bi increases. Therefore, when the heat treatment is carried out as Examples 1 through 9, it is possible to greatly decrease the volume of initial gas (the volume of gas before discharge) even if the amount of added Bi is small, so that it is possible to decrease the volume of gas after over discharge while decreasing the amount of added Bi. That is, it is possible to accomplish both of the decrease of the volume of gas before discharge and the decrease of the volume of gas after over discharge.

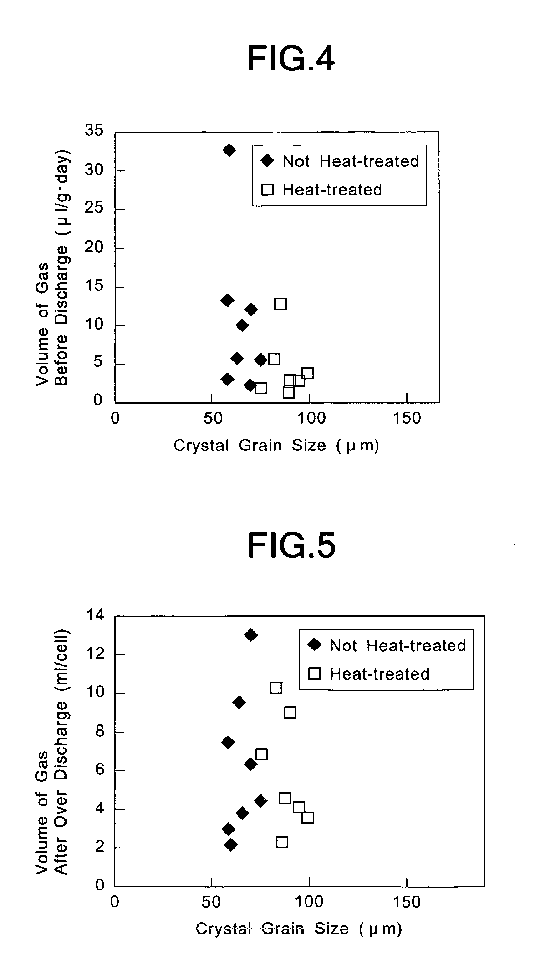

With respect to Examples 1 through 9 and Comparative Examples 1 through 8, the relationship between the crystal grain size and the volume of gas before discharge is shown in FIG. 4, and the relationship between the crystal grain size and the volume of gas after over discharge is shown in FIG. 5. As can be seen from these figures and Table 2, as compared with Comparative Examples 1 through 8 wherein the heat treatment is not carried out, when the heat treatment is carried out as Examples 1 thorough 9, the crystal grain size can be increased even if the amount of added Bi is the same, and the volume of initial gas and the volume of gas after over discharge can be decreased even if the crystal grain size is the same.

### Examples 15 through 19, and Comparative Examples 14 through 17

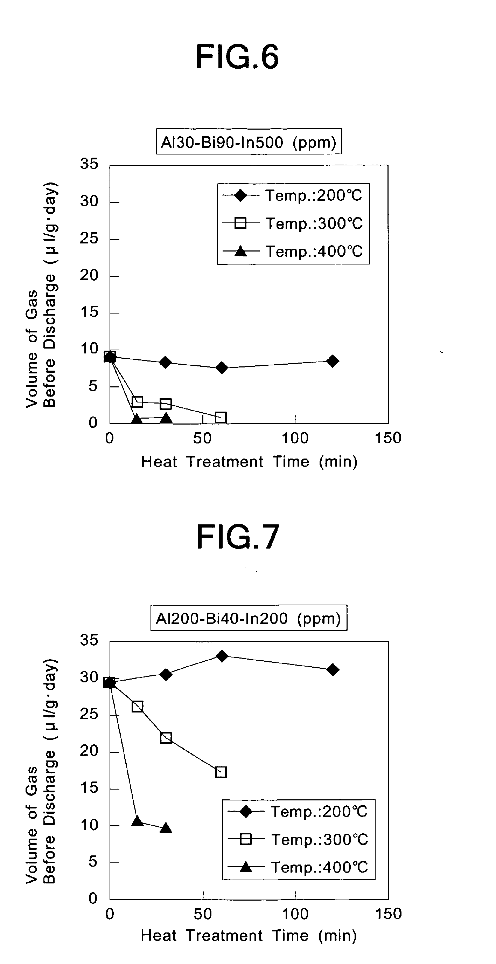

Zinc alloy powders containing 30 ppm of A1, 90 ppm of Bi and 500 ppm of In were prepared to be heat-treated as shown in Table 3 (no heat treatment was carried out in Comparative Example 9) . With respect to the zinc alloy powders thus heat-treated, the volume of initial gas (the volume of gas before discharge) was measured by the same method as that in Examples 1 through 7. The results are shown in Table 3 and FIG. 6. As can be seen from Table 3 and FIG. 6, when the heat treatment is carried out at a heat treatment temperature of 300 to 400 °C as Examples 15 through 19, it is possible to greatly decrease the volume of initial gas.

**Table 3**

| | Heat Treatment Temp. (°C) | Heat Treatment Time (min) | Initial Gas (µl/g·day) |
|---|---|---|---|
| Comp.14 | room temp. | 0 | 9.3 |
| Comp.15 | 200 | 30 | 8.2 |
| Comp.16 | 200 | 60 | 7.6 |
| Comp.17 | 200 | 120 | 8.4 |
| Ex.15 | 300 | 15 | 3.3 |
| Ex.16 | 300 | 30 | 3.1 |
| Ex.17 | 300 | 60 | 1.6 |
| Ex.18 | 400 | 15 | 1.1 |
| Ex.19 | 400 | 30 | 1.7 |

### Examples 20 through 24, and Comparative Examples 18 through 21

Zinc alloy powders containing 200 ppm of Al, 40 ppm of Bi and 200 ppm of In were prepared to be heat-treated as shown in Table 4 (no heat treatment was carried out in Comparative Example 18). With respect to the zinc alloy powders thus heat-treated, the volume of initial gas (the volume of gas before discharge) was measured by the same method as that in Examples 1 through 7. The results are shown in Table 4 and FIG. 7. As can be seen from Table 4 and FIG. 7, when the heat treatment is carried out at a heat treatment temperature of 300 to 400 °C as Examples 20 through 24, it is possible to greatly decrease the volume of initial gas.

**Table 4**

| | Heat Treatment Temp. (°C) | Heat Treatment Time (min) | Initial Gas (µl/g·day) |
|---|---|---|---|
| Comp.18 | room temp. | 0 | 29.6 |
| Comp.19 | 200 | 30 | 31.1 |
| Comp.20 | 200 | 60 | 33.3 |
| Comp.21 | 200 | 120 | 31.8 |
| Ex.20 | 300 | 15 | 26.7 |
| Ex.21 | 300 | 30 | 22.2 |
| Ex.22 | 300 | 60 | 17.3 |
| Ex.23 | 400 | 15 | 11.3 |
| Ex.24 | 400 | 30 | 9.6 |

### Example 25

After a molten zinc alloy containing 40 ppm of bismuth, 200 ppm of aluminum and 200 ppm of indium was sprayed into air to be atomized by the gas atomizing method, the grain size of the atomized zinc alloy was controlled by means of a sieve of 35 to 200 meshes to prepare a zinc alloy powder. Then, the zinc alloy powder thus prepared was heat-treated at 400 °C in an atmosphere of nitrogen gas for 30 minutes by means of a heat treating furnace, and then, gradually cooled to a room temperature in an atmosphere of nitrogen gas.

The zinc alloy powder thus obtained was embedded in a resin, and the surface thereof was polished. Then, the surface of the zinc alloy powder thus polished was analyzed by means of an electron probe microanalyzing (EPMA) system (JXA-8200 produced by Nippon Electronics Co., Ltd.) on measurement conditions that the accelerating voltage is 20 kV, the irradiation current being 2 x 10⁻⁸ A, the sampling time being 300 milliseconds, the number of pixels being 30 x 30, and the size of each pixel being 0.5 µm. As a result, the maximum value of peak (themaximum peak value) for segregated substances of Bi was 37 counts, and the average value of backgrounds was 8.9 counts, so that the ratio of the maximum peak value to background (the maximum peak value / background) was 4.2.

In addition, 5g of the zinc alloy powder thus heat-treated was mixed in 10g of a solution containing 40% KOH and saturated zinc oxide to be held at 60 °C for three days, and then, the average speed of the volume of generated gas was calculated as the volume of initial gas (the volume of gas before discharge). As a result, the volume of initial gas was 6.1 µl/g·day.

Moreover, the zinc alloy powder thus heat-treated was mixed with a solution containing 40% KOH and saturated zinc oxide and with polyacrylic acid to prepare a gel. The gel thus prepared was used as an active material of a negative electrode, and manganese dioxide was used as an active material of a positive electrode to prepare an LR6 cell. After this cell was discharged with a resistance of 10 Ω for 48 hours, it was held at 60 °C for 8 hours, and the volume of gas generated in the cell (the volume of gas after over discharge) was measured. As a result, the volume of gas after over discharge was 2.8 ml/cell.

### Example 26

With respect to a zinc alloy powder obtained by the same method as that in Example 25, except that the amount of added bismuth was 100 ppm, the same surface analysis as that in Example 25 was carried out. As a result, the maximum peak value for segregated substances of Bi was 41 counts, and the average value of backgrounds was 8.8 counts, so that the ratio of the maximum peak value to background (the maximum peak value / background) was 4. 6. In addition, the volume of initial gas and the volume of gas after over discharge were obtained by the same method as that in Example 25. As a result, the volume of initial gas was 3. 1 µl/g · day, and the volume of gas after over discharge was 4.0 ml/cell.

### Example 27

With respect to a zinc alloy powder obtained by the same method as that in Example 25, except that the amount of added bismuth was 150 ppm, the amount of added aluminum was 30 ppm and the amount of added indium was 500 ppm, the same surface analysis as that in Example 25 was carried out. As a result, the maximum peak value for segregated substances of Bi was 123 counts, and the average value of backgrounds was 8.2 counts, so that the ratio of the maximum peak value to background (the maximum peak value / background) was 15.1. In addition, the volume of initial gas and the volume of gas after over discharge were obtained by the same method as that in Example 25. As a result, the volume of initial gas was 1.6 µl/g · day, and the volume of gas after over discharge was 4.7 ml/cell.

### Comparative Example 22

With respect to a zinc alloy powder obtained by the same method as that in Example 25, except that no heat treatment was carried out, the same surface analysis as that in Example 25 was carried out. As a result, the maximum peak value for segregated substances of Bi was 21 counts, and the average value of backgrounds was 9.9 counts, so that the ratio of the maximum peak value to background (the maximum peak value / background) was 2.1. In addition, the volume of initial gas and the volume of gas after over discharge were obtained by the same method as that in Example 25. As a result, the volume of initial gas was 26.9 µ l/g·day, and the volume of gas after over discharge was 2.9 ml/cell.

### Comparative Example 23

With respect to a zinc alloy powder obtained by the same method as that in Example 26, except that no heat treatment was carried out, the same surface analysis as that in Example 25 was carried out. As a result, the maximum peak value for segregated substances of Bi was 22 counts, and the average value of backgrounds was 9.4 counts, so that the ratio of the maximum peak value to background (the maximum peak value / background) was 2.3. In addition, the volume of initial gas and the volume of gas after over discharge were obtained by the same method as that in Example 25. As a result, the volume of initial gas was 5.3 µ l/g·day, and the volume of gas after over discharge was 3.6 ml/cell.

### Comparative Example 24

With respect to a zinc alloy powder obtained by the same method as that in Example 27, except that no heat treatment was carried out, the same surface analysis as that in Example 25 was carried out. As a result, the maximum peak value for segregated substances of Bi was 22 counts, and the average value of backgrounds was 9.3 counts, so that the ratio of the maximum peak value to background (the maximum peak value / background) was 2.4. In addition, the volume of initial gas and the volume of gas after over discharge were obtained by the same method as that in Example 25. As a result, the volume of initial gas was 5.0 µ l/g · day, and the volume of gas after over discharge was 4.5 ml/cell.

### Comparative Example 25

With respect to a zinc alloy powder obtained by the same method as that in Example 25, except that the heat treatment temperature was 150 °C and the heat treatment time was 120 minutes, the same surface analysis as that in Example 25 was carried out. As a result, the maximum peak value for segregated substances of Bi was 30 counts, and the average value of backgrounds was 8.7 counts, so that the ratio of the maximum peak value to background (the maximum peak value/background) was 3.4. In addition, the volume of initial gas and the volume of gas after over discharge were obtained by the same method as that in Example 25. As a result, the volume of initial gas was 25.0 µ l/g · day, and the volume of gas after over discharge was 3.0 ml/cell.

### Comparative Example 26

With respect to a zinc alloy powder obtained by the same method as that in Example 26, except that the heat treatment temperature was 150 °C and the heat treatment time was 120 minutes, the same surface analysis as that in Example 25 was carried out. As a result, the maximum peak value for segregated substances of Bi was 32 counts, and the average value of backgrounds was 8.8 counts, so that the ratio of the maximum peak value to background (the maximum peak value / background) was 3.6. In addition, the volume of initial gas and the volume of gas after over discharge were obtained by the same method as that in Example 25. As a result, the volume of initial gas was 6.1 µ l/g · day, and the volume of gas after over discharge was 4.1 ml/cell.

### Comparative Example 27

With respect to a zinc alloy powder obtained by the same method as that in Example 27, except that the heat treatment temperature was 150 °C and the heat treatment time was 120 minutes, the same surface analysis as that in Example 25 was carried out. As a result, the maximum peak value for segregated substances of Bi was 35 counts, and the average value of backgrounds was 8.9 counts, so that the ratio of the maximum peak value to background (the maximum peak value / background) was 3. 9. In addition, the volume of initial gas and the volume of gas after over discharge were obtained by the same method as that in Example 25. As a result, the volume of initial gas was 5.9 µ l/g·day, and the volume of gas after over discharge was 4.8 ml/cell.

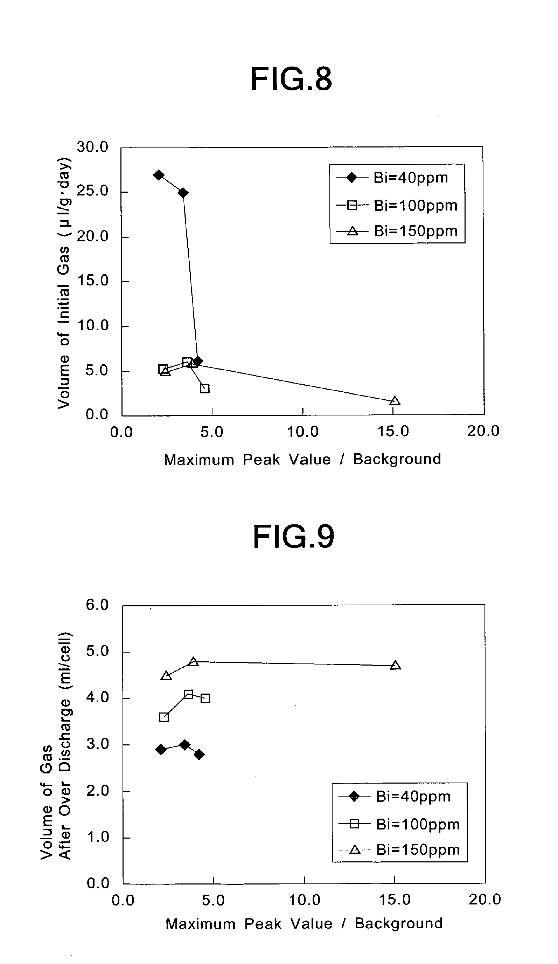

The results in Examples 25 through 27 and Comparative Examples 22 through 27 are shown in Tables 5 and 6, and FIGS. 8 and 9.

**Table 5**

| | Additives | | | Atmosphere | |
|---|---|---|---|---|---|
| | Bi (ppm) | Al (ppm) | In (ppm) | Temp. (°C ) | Time (min) |
| Ex.25 | 40 | 200 | 200 | 400 | 30 |
| Ex.26 | 100 | 200 | 200 | 400 | 30 |
| Ex.27 | 150 | 30 | 500 | 400 | 30 |
| Comp.22 | 40 | 200 | 200 | - | - |
| Comp.23 | 100 | 200 | 200 | - | - |
| Comp.24 | 150 | 30 | 500 | - | - |
| Comp.25 | 40 | 200 | 200 | 150 | 120 |
| Comp.26 | 100 | 200 | 200 | 150 | 120 |
| Comp.27 | 150 | 30 | 500 | 150 | 120 |

**Table 6**

| | Segregated Substances of Bi (EPMA) | | | Volume of Generated Gas | |
|---|---|---|---|---|---|
| | Maximum Peak Value (count) | Back -ground (count) | Maximum Peak Value/Background | Initial Gas (µl/g·day) | Gas After Over Discharge (ml/cell) |
| Ex.25 | 37 | 8.9 | 4.2 | 6.1 | 2.8 |
| Ex.26 | 41 | 8.8 | 4.6 | 3.1 | 4.0 |
| EX.27 | 123 | 8.2 | 15.1 | 1.6 | 4.7 |
| Comp.22 | 21 | 9.9 | 2.1 | 26.9 | 2.9 |
| Comp.23 | 22 | 9.4 | 2.3 | 5.3 | 3.6 |
| Comp.24 | 22 | 9.3 | 2.4 | 5.0 | 4.5 |
| Comp.25 | 30 | 8.7 | 3.4 | 25.0 | 3.0 |
| Comp.26 | 32 | 8.8 | 3.6 | 6.1 | 4.1 |
| Comp.27 | 35 | 8.9 | 3.9 | 5.9 | 4.8 |

As can be seen from Tables 5 and 6, in Comparative Examples 22 through 27, the ratio of the maximum peak value to background (the maximum peak value / background) is less than 4.0, whereas in Examples 25 through 27, this ratio is not less than 4.0, so that the volume of initial gas can be decreased without increasing the volume of gas after over discharge when the amount of added bismuth is the same. In particular, in Example 25 wherein the amount of added bismuth is 40 ppm, as compared with Examples 22 and 25 wherein the same amount of bismuth is added, the volume of initial gas can be greatly decreased as shown in FIG. 8, and the volume of gas after over discharge is not increased as shown in FIG. 9. In addition, as shown in FIG. 9, the volume of gas after over discharge decreases as the amount of added bismuth decreases. Therefore, Example 25 isparticularlypreferred. That is, in Examples 25 through 27, it is possible to prevent the volume of gas after over discharge from being increased by decreasing the amount of added bismuth, and it is possible to decrease the volume of initial gas even if the amount of added bismuth is small. In particular, such effects are remarkable when the amount of added bismuth is small as Example 25.

Moreover, from the reflected electron image of a cross section of the zinc alloy powder for alkaline cells in each of Examples 25 through 27, it was found that a larger amount of bismuth is segregated on grain boundary phases than the interior of the matrix, and the simple substances, solid solutions or intermetallic compounds of bismuth and indium exist on the grain boundary phases. Since hydrogen gas before the discharge of the cell is mainly generated by the corrosion of crystal grain boundaries of zinc, it is considered that, if bismuth and indium are selectively segregated on the crystal grain boundaries in the form of simple substances, solid solutions or intermetallic compounds, it is possible to decrease the corroded portions of the crystal grain boundaries of zinc, and it is possible to effectively inhibit the gas of zinc powder from being generated even if the amount of added bismuth and indium is small. Since this effect can be obtained even if the amount of added bismuth is decreased as Example 25, it is also possible to decrease the volume of gas generated after discharge.

## Claims

1. A method for producing a zinc alloy powder for an alkaline cell, said method comprising the steps of:
preparing a zinc alloy powder consisting essentially of 0.0001 to 0.500 wt% of at least one element selected from the group consisting of aluminum, indium, gallium, thallium, magnesium, calcium, strontium, cadmium, tin and lead, 0.001 to 0.050 wt% of bismuth, and the balance being zinc and unavoidable impurities; and
heat-treating the zinc alloy powder at a higher temperature than 250 °C in an inert gas or reducing gas atmosphere.

2. A method for producing a zinc alloy powder for an alkaline cell as set forth in claim 1, wherein the amount of bismuth in said zinc alloy powder is in the range of from 0.004 to 0.050 wt%.

3. A method for producing a zinc alloy powder for an alkaline cell as set forth in claim 1, wherein said temperature is lower than 400 °C.

4. A method for producing a zinc alloy powder for an alkaline cell as set forth in claim 3, wherein said temperature is not lower than 300 °C.

5. A method for producing a zinc alloy powder for an alkaline cell as set forth in claim 3, wherein the amount of bismuth in said zinc alloy powder is in the range of from 0.009 to 0.030 wt%.

6. A method for producing a zinc alloy powder for an alkaline cell as set forth in claim 3, the amount of bismuth in said zinc alloy powder is in the range of from 0.012 to 0.020 wt%.

7. A method for producing a zinc alloy powder for an alkaline cell as set forth in claim 1, said temperature is not lower than 400 °C.

8. A method for producing a zinc alloy powder for an alkaline cell as set forth in claim 7, wherein the amount of bismuth in said zinc alloy powder is in the range of 0.004 to 0.010 wt%.

9. An alkaline primary cell wherein a zinc alloy powder for an alkaline cell, which is produced by a method for producing a zinc alloy powder for an alkaline cell as set forth in claim 1, is used as an active material of a negative electrode.

10. A zinc alloy powder for an alkaline cell, said zinc alloy powder consisting essentially of:
0.0001 to 0.500 wt% of at least one element selected from the group consisting of aluminum, indium, gallium, thallium, magnesium, calcium, strontium, cadmium, tin and lead;
0.001 to 0.012 wt% of bismuth; and
the balance being zinc and unavoidable impurities, and
wherein said zinc alloy powder has a bulk density of not less than 3.01 g/cm³.

11. A zinc alloy powder for an alkaline cell as set forth in claim 10, wherein said bulk density is not less than 3.03 g/cm³.

12. A zinc alloy powder for an alkaline cell, said zinc alloy powder consisting essentially of:
0.0001 to 0.500 wt% of at least one element selected from the group consisting of aluminum, indium, gallium, thallium, magnesium, calcium, strontium, cadmium, tin and lead;
0.027 to 0.050 wt% of bismuth; and
the balance being zinc and unavoidable impurities, and
wherein said zinc alloy powder has a bulk density of not less than 2.76 g/cm³.

13. A zinc alloy powder for an alkaline cell as set forth in claim 12, wherein said bulk density is not less than 2.78 g/cm³.

14. A zinc alloy powder for an alkaline cell, said zinc alloy powder consisting essentially of:
0.0001 to 0.500 wt% of at least one element selected from the group consisting of aluminum, indium, gallium, thallium, magnesium, calcium, strontium, cadmium, tin and lead;
0.012 to 0.027 wt% of bismuth; and
the balance being zinc and unavoidable impurities, and
wherein said zinc alloy powder has a bulk density derived from y ≧ 3.25 - 18x assuming that the amount of bismuth in said zinc alloy powder denotes x (wt%) and the bulk density denotes y (g/cm³).

15. A zinc alloy powder for an alkaline cell as set forth in any one of claims 10 through 14, wherein said zinc alloy powder is heat-treated at a higher temperature than 250 °C in an inert gas or reducing gas atmosphere.

16. A zinc alloy powder for an alkaline cell as set forth in any one of claims 10 through 14, wherein a ratio of a maximum peak value of segregated substances of bismuth to an average value of backgrounds is not less than 4.0 at a sampling time of 300 milliseconds in an electron probe microanalysis.

17. A zinc alloy powder for an alkaline cell as set forth in claim 16, wherein said ratio is not less than 4.2.

18. An alkaline primary cell wherein a zinc alloy powder for an alkaline cell as set forth in any one of claims 10 through 14 is used as an active material of a negative electrode.
